# EUROPÄISCHE PATENTANMELDUNG

(11) **EP 1 331 067 A2**
(43) Veröffentlichungstag der Anmeldung: **30.07.2003**
(21) Anmeldenummer: 02090393.6
(22) Anmeldetag: 29.11.2002
(51) Int. Cl.: B25C 5/16, B25C 5/11, B27F 7/07

(54) **System zur Befestigung von rohrförmigen Gegenständen**

(30) Priorität: 23.01.2002 DE 20201020 U
(71) Anmelder: KERMI GmbH, 94447 Plattling (DE)
(72) Erfinder: Fonfara, Harald, 94551 Lalling (DE); Scherbeitz, Jürgen, 6472 Erstfeld (CH)
(74) Vertreter: Köckeritz, Günter

(57) **Zusammenfassung**

System zur Befestigung von rohrförmigen Gegenständen auf Dämmplatten bestehend aus einem Setzgerät (1) und Befestigungsklammern (2),
wobei die einzelnen Klammern (2) eine Verdrehsicherung (2.1) aufweisen und durch Scharniere (2.2) zu einem Magazin zusammengefasst sind,
das Setzgerät (1) aus einem Führungteil (1.1), einem relativ zum Führungsteil (1.1) beweglichen Stempel (1.2) und einem relativ zum Führungsteil (1.1) fest angeordneten Magazinhalter (1.3) besteht,
wobei im Schußkopfbereich des Führungsteils (1.1) Führungsrillen (1.1.1) und eine Auswerferraste (1.1.2) vorgesehen sind.

## Beschreibung

Die Erfindung betrifft ein System zu Befestigung von rohrförmigen Gegenständen auf Dämmplatten, wobei das System aus einem Setzgerät und Befestigungsklammern besteht. Derartige Systeme finden insbesondere ihren Einsatz bei der Befestigung von in wärmeisolierenden Platten einzustoßenden und sich dort verankernden Klammern für Heizrohre von Fußbodenheizungen.

Derartige Klammern werden in großen Stückzahlen bei der Verlegung von Heizrohren für Flächenheizungen oder von Kabeln verwendet. Sie dienen zur Fixierung beziehungsweise zur Halterung der Rohre oder Kabel bevor der flüssige Estrich eingebracht wird. Bekannte Halter dieser Art werden in der DE 31 25 318 beschrieben. Ein entsprechendes Verlegegerät ist aus der DE 31 29 818 bekannt.
Die Halter entsprechend der DE 31 25 318, weisen jedoch den Nachteil auf, dass sie als Einzelteile hergestellt werden und somit ein Zusammenfügen einzelner Halter zu einem Magazin in einem nachgeschalteten Arbeitsgang erfolgen muss, wobei die Klammern durch ein Klebeband zusammengehalten werden.

Aus der DE 40 09 573 A1 sind Halter zur Fixierung von Rohren, Schläuchen, Kabeln und ähnlichen Gegenständen mit zylindrischer Oberfläche und Setzgerät für derartige Halter bekannt. Diese Halter werden in einer gestreckten Anordnung als Magazin in einem Arbeitsgang hergestellt.

Bei der Verarbeitung müssen diese Halter dann im Bereich einer Sollbiegezone von einer gestreckten in eine krampenförmige Form überführt werden.
Der Nachteil der bekannten Systeme besteht darin, dass die einzelnen Klammern mit Hilfe eines Klebebandes zum Magazin zusammengefügt werden müssen. Dieser Magaziniervorgang verursacht zusätzliche Kosten, wobei das Klebeband ein weiteres Problem darstellt, weil dessen Reste sich häufig im Bereich der Stempelführung des Setzgerätes ablagern und zu einem erhöhten Verschleiß und Funktionsstörungen des Gerätes führen. Ein weiteres Problem besteht darin, dass bei den bekannten Tackersystemen sich die Klammern während des Tackervorganges im Schusskopf verdrehen und dadurch dann die Nadelspitzen das Rohr seitlich beschädigen.

Geräte beziehungsweise Systeme, bei denen die Verformung der Krampe im Tackergerät erfolgt, sind äußerst kompliziert und sehr störanfällig.
Ein weiterer Nachteil derartiger Systeme besteht darin, dass die Widerhaken in Rohrrichtung angeformt sein müssen (aus entformungstechnischen Gründen) und das diese Widerhaken dann im Bogenbereich des Rohres keine ausreichende Haltekraft bieten, was insbesondere, wenn man die Größe der Folienbeschädigung durch Widerhaken bedenkt, ein großes Problem darstellt.

Die Aufgabe der Erfindung besteht darin die bekannten Systeme zur Befestigung von rohrförmigen Gegenständen auf Dämmplatten zu verbessern.
Erfindungsgemäß wird diese Aufgabe durch die Merkmale des Anspruchs 1 gelöst. Vorteilhafte Weiterbildungen der Erfindung sind in den Ansprüchen 2 bis 8 enthalten.
Demnach beinhaltet die Erfindung ein System zur Befestigung von rohrförmigen Gegenständen auf Dämmplatten, welches aus einem Setzgerät und Befestigungsklammern besteht. Die einzelnen Klammern weisen eine Verdrehsicherung auf und sind durch Scharniere zu einem Magazin zusammengefasst.
Das Setzgerät besteht aus einem Führungsteil, einem relativ zum Führungsteil beweglichen Stempel und einem relativ zum Führungsteil fest angeordneten Magazinhalter, wobei im Schusskopfbereich des Führungsteiles Führungsrillen und eine Auswerferraste vorgesehen sind.
Im Schusskopfbereich des Führungsbereiches ist nach einem bevorzugten Merkmal der Erfindung am Magazinhalter ein beweglicher Fuß angeordnet.
Nach einem besonderen Merkmal der Erfindung wird der Stempel durch eine Feder bewegt, welche auf dem Führungsteil angeordnet ist, wobei die Feder mindestens teilweise mit einer Abdeckung versehen ist. Am Magazinhalter ist weiterhin ein Gewicht vorgesehen, welches mit dem Stempel über eine Verlustsicherung verbunden ist. Zur Führung der magazinierten Klammern sind am Magazinhalter nach einem anderen Merkmal Rillen vorgesehen. Im oberen Bereich des Magazinhalters ist nach einem bevorzugten Merkmal eine Einführhilfe für das Klammermagazin vorgesehen, die nicht Teil des vertikalen Führungsbereiches der magazinierten Klammern ist. Nach einem weiteren Merkmal der Erfindung sind die Klammern zu einem krampenförmig gebogenen Magazin zusammengefasst. Die Schenkel sind mit Widerhaken versehen, wobei das Magazin in einem Arbeitsgang im Kunststoff-Spritzgussverfahren herstellbar ist.
Die Besonderheiten des Systems bestehen darin, dass die Klammern bereits in ihrer endgültigen Verarbeitungsform als ganzes Magazin produziert werden und ein Verdrehen der Nadeln im Schusskopf vermieden werden kann, wobei die Nadeln auf einer einfachen Magazinstange geführt werden können und die äußeren Widerhaken in Zugrichtung des Rohres ausgestattet sind.
Nachfolgend soll die Erfindung anhand eines Ausführungsbeispieles näher beschrieben werden. In den Zeichnungen zeigen:
- Figur 1:: ein Setzgerät,
- Figur 2:: Seitenansicht eines Klammermagazines,
- Figur 3:: Vorderansicht eines Klammermagazines,
- Figur 4:: Draufsicht auf ein Klammermagazin,
- Figur 5:: Detailansicht R im Schusskopfbereich des Führungsteiles,
- Figur 6:: Seitenansicht und Schnittdarstellung im Schusskopfbereich,
- Figur 7:: Seitenansicht und Schnittdarstellung im Schusskopfbereich,
- Figur 8:: Schnitt A-A Querschnitt durch den Schusskopfbereich.

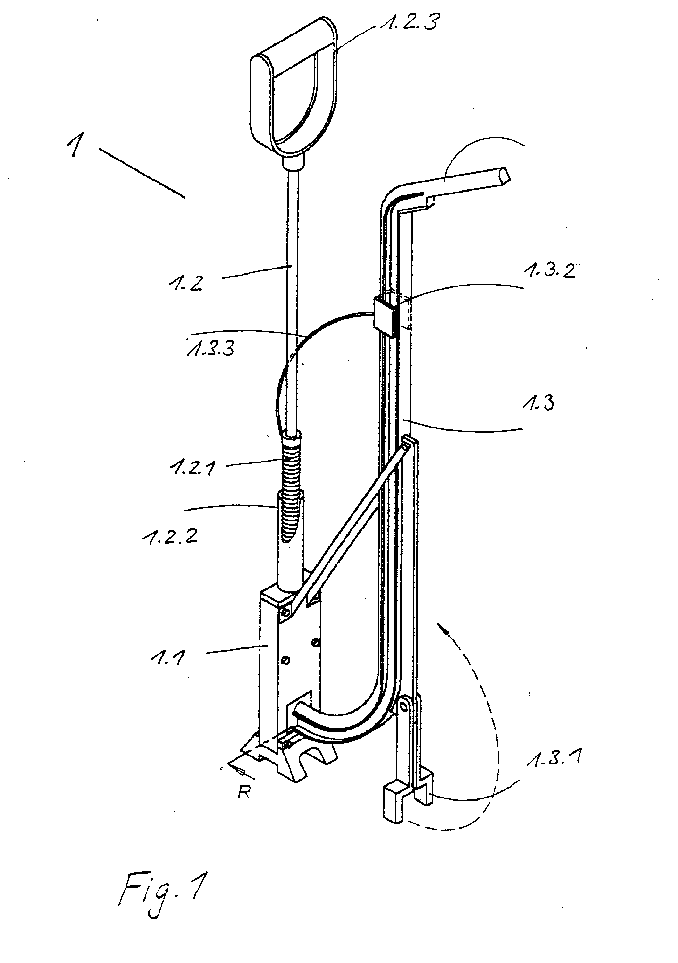

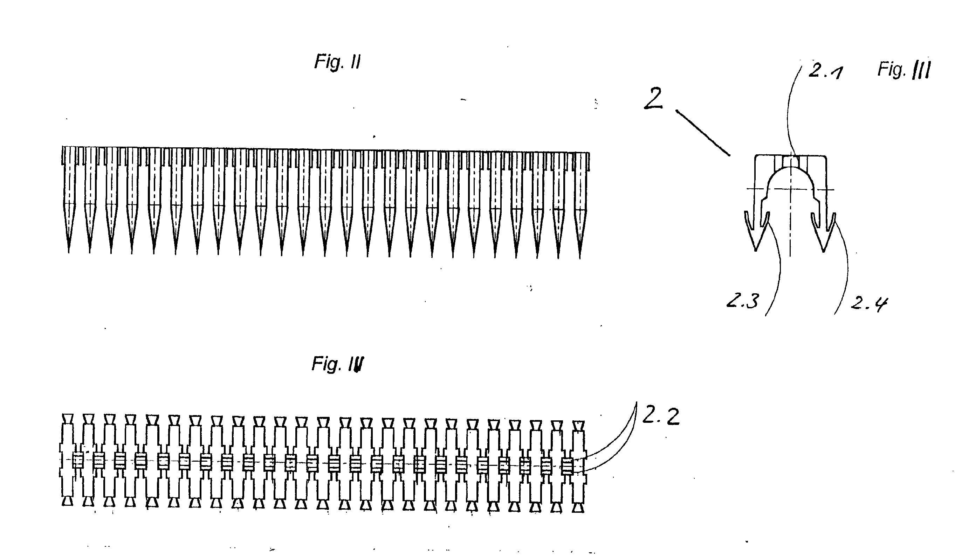

Die Figur 1 zeigt ein Setzgerät der erfindungsgemäßen Art. Das Setzgerät besteht aus einem Führungsteil 1.1 und einem relativ zum Führungsteil 1.1 beweglichen Stempel 1.2. Das Setzgerät umfasst weiter einen relativ zum Führungsteil 1.1 fest angeordneten Magazinhalter 1.3. Im Schusskopfbereich des Führungsteils 1. 1 sind Führungsrillen 1. 1. 1 und eine Auswerferraste 1.1.2 vorgesehen. Die Auswerferraste unterstützt den Auswurf der abgetrennten Klammern. Weiterhin ist im Schusskopfbereich des Führungsteils 1.1 ein Trennblech 1.1.3 vorgesehen, welches die Trennung der für den Setzvorgang benötigten Einzelklammer vom Magazin unterstützt.

Das Setzgerät ist weiterhin mit einem beweglichen Fuß 1.3.1 versehen, welcher am Magazinhafter 1.3 angeordnet ist. Der bewegliche Fuß kann zum Abstellen des Gerätes in Abstützstellung bewegt werden. Der Stempel 1.2 wird durch eine Feder 1.2.1 bewegt, welche auf dem Führungsteil 1.1 angeordnet ist. Die Feder 1.2.1 ist teilweise mit einer Abdeckung 1.2.2 versehen. Die Abdeckung 1.2.2 dient zur Begrenzung des Federweges, das heißt, die Feder muss nicht auf ihrer oder über ihre gesamte Länge zusammengedrückt werden, wodurch die Lebensdauer der Feder erheblich erhöht werden kann. Außerdem kann eine längere Feder verwendet werden, wodurch sich der Kraftaufwand zum Zusammendrücken der Feder verringert.
Am oberen Ende des Stempels 1.2 ist ein Griff 1.2.3 zum Niederdrücken des Stempels vorgesehen . Am Magazinhalter 1.3 ist ein Gewicht 1.3.2 vorgesehen, welches auf der Feder 1.2.1 ruht und über eine Verlustsicherung 1.3.3 mit dem Stempel 1.2 verbunden ist. Am Magazinhalter 1.3 sind Rillen 1.3.4 zur Führung der magazinierten Klammern vorgesehen. Im oberen Bereich des Magazinhalters 1.3 ist weiterhin eine Einführhilfe 3 für das Klammermagazin vorgesehen.

Die Zeichnungen 5 bis 8 zeigen verschiedene Darstellungen des Führungsteiles 1.1 im Schusskopfbereich.

Figur 5 zeigt eine im Schusskopfbereich angeordnete Klammer.

Aus der Figur 6 ist die Auswerferraste 1. 1.2 erkennbar.

Aus der Figur 7 ist das Trennblech 1. 1.3 ersichtlich.

Die Figur 8 zeigt den Schnitt A-A, wobei hier die Führungsrillen 1. 1. 1 und die Auswerferraste 1. 1.2 erkennbar sind.

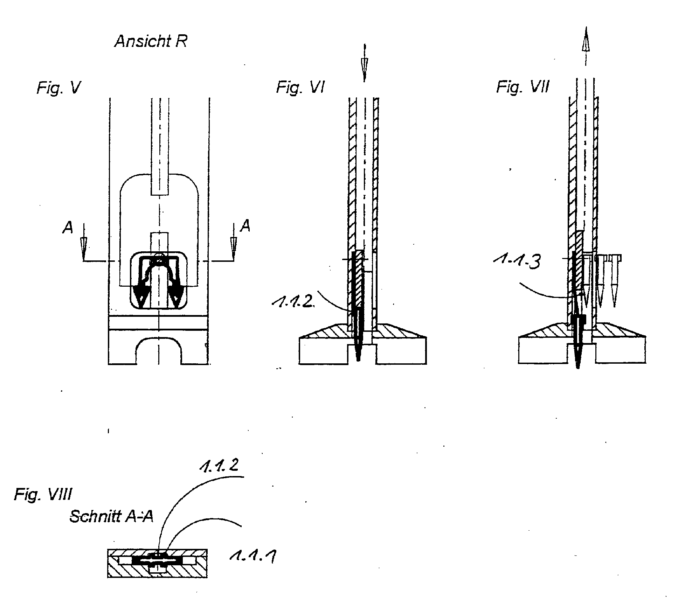

In den Figuren 2 bis 4 sind Ansichten des Klammermagazines dargestellt. Die Figur 2 zeigt eine Seitenansicht des Klammermagazines beziehungsweise einer einzelnen Klammer. Darin kann man die Verdrehsicherung 2.1 sowie die mit Widerhaken versehenen Schenkel 2.3 beziehungsweise 2.4 erkennen. Die krampenförmig gebogenen Klammern sind über Scharniere 2.2 zu einem Magazin zusammengefasst.

## Patentansprüche

1. System zur Befestigung von rohrförmigen Gegenständen auf Dämmplatten bestehend aus einem Setzgerät (1) und Befestigungsklammern (2),
wobei die einzelnen Klammern (2) eine Verdrehsicherung (2.1) aufweisen und durch Scharniere (2.2) zu einem Magazin zusammengefasst sind,
das Setzgerät (1) aus einem Führungteil (1.1), einem relativ zum Führungsteil (1.1) beweglichen Stempel (1.2) und einem relativ zum Führungsteil (1.1) fest angeordneten Magazinhalter (1.3) besteht,
wobei im Schußkopfbereich des Führungsteils (1.1) Führungsrillen (1.1.1) und eine Auswerferraste (1.1.2) vorgesehen sind.

2. System nach Anspruch 1, **dadurch gekennzeichnet, dass** im Schußkopfbereich des Führungsteils (1.1) ein Trennblech (1.1.3) vorgesehen ist.

3. System nach einem der o.g. Ansprüche, **dadurch gekennzeichnet, dass** am Magazinhalter (1.3) ein beweglicher Fuß (1.3.1) angeordnet ist.

4. System nach einem der o.g. Ansprüche, **dadurch gekennzeichnet, dass** sich der Stempel (1.2) durch eine Feder (1.2.1) bewegt, welche auf dem Führungsteil (1.1) angeordnet ist, wobei die Feder (1.2.1) mindestens teilweise mit einer Abdeckung (1.2.2) versehen ist.

5. System nach einem der o.g. Ansprüche, **dadurch gekennzeichnet, dass** am Magazinhalter (1.3) ein Gewicht (1.3.2) vorgesehen ist, welches mit dem Stempel (1.2) über eine Verlustsicherung (1.3.3) verbunden ist.

6. System nach einem der o.g. Ansprüche, **dadurch gekennzeichnet, dass** am Magazinhalter (1.3) Rillen (1.3.4) zur Führung der magazinierten Klammern (2) vorgesehen sind.

7. System nach einem der o.g. Ansprüche, **dadurch gekennzeichnet, dass** am oberen Bereich des Magazinhalters (1.3) eine Einführhilfe (3) für das Klammermagazin (2) vorgesehen ist.

8. System nach Anspruch 1, **dadurch gekennzeichnet, dass** die zu einem Magazin zusammengefaßten Klammern (2) krampenförmig gebogen sind und die Schenkel (2.3, 2.4) mit Widerhaken versehen sind, wobei das Magazin in einem Arbeitsgang im Kunststoff-Spritzgussverfahren herstellbar ist.
